# EUROPEAN PATENT APPLICATION

(11) **EP 1 916 560 A1**
(43) Date of publication of application: **30.04.2008**
(21) Application number: 07114563.5
(22) Date of filing: 17.08.2007
(51) Int. Cl.: G02B 27/00, G03B 9/46

(54) **Shutter structure for light scanning unit and image forming apparatus using the same**

(30) Priority: 27.10.2006 KR 20060105169
(71) Applicant: Samsung Electronics Co., Ltd., Suwon-si, Gyeonggi-do 442-742 (KR)
(72) Inventor: Chun, Jin-kwon, Yeongtong-gu Gyeonggi-do Suwon-si (KR)
(74) Representative: Waddington, Richard

(57) **Abstract**

A shutter structure for a light scanning unit (20), which is used in the light scanning unit that scans a photosensitive medium of a developing unit with a beam deflected by a beam deflector (25) accommodated in a housing (31) having an emission window (29), and selectively blocks the beam directed at the emission window (29), and an image forming apparatus using the same. The shutter structure includes a shutter that is rotatably provided outside the housing (31) and selectively blocks the beam directed at the emission window (29), a joining unit that is formed at corresponding positions of the shutter and the housing (31) so that the shutter is rotatably joined with the housing (31), and a push member that pushes the shutter so that the shutter is rotated in a direction in which the emission window (29) is opened.

## Description

### BACKGROUND OF THE INVENTION

### Field of the Invention

The present invention relates to a shutter structure for a light scanning unit, and more particularly, to a shutter structure for a light scanning unit, which is capable of blocking a beam that passes through an emission window of a light scanning unit.

### Description of the Related Art

In general, a light scanning unit, being employed for equipment such as a laser printer, a digital copier, a bar code reader, a facsimile machine and the like, forms a latent image on a photosensitive medium through a main scanning by a beam deflector and a sub scanning by rotation of the photosensitive medium.

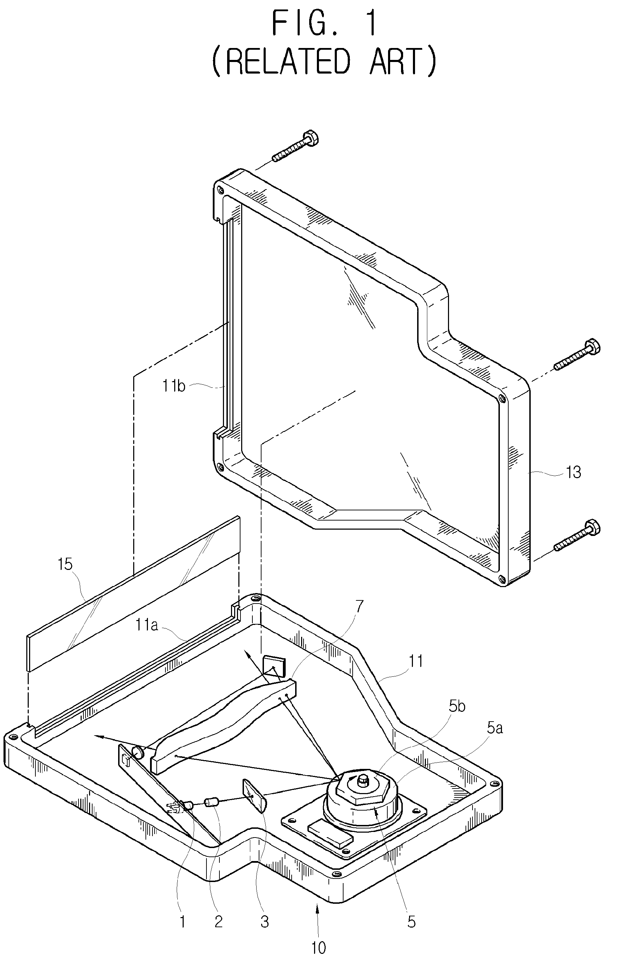

Referring to FIG. 1, a general light scanning unit includes a light source 1 that generates and emits light, a beam deflector 5 that deflects incident light such that a photosensitive medium (not illustrated) is scanned with the beam emitted from the light source 1, and an f-θ lens 7 that corrects an error contained in the beam deflected by the beam deflector 5. In addition, the light scanning unit includes a collimating lens 2 that is placed on an optical path between the light source 1 and the beam deflector 5 and converges the beam emitted from the light source 1, and a cylinder lens 3 that shapes the beam.

The beam deflector 5 includes a driving source 5a and a polygon mirror 5b that is rotated by the driving source 5a and has a plurality of reflecting planes. With such configuration, the beam reflected from the polygon mirror 5b is changed in its reflection direction while the polygon mirror 5b is rotated and mainly scanned on the photosensitive medium.

On the other hand, in the light scanning unit as constructed above, if optical devices including the light source 1, the beam deflector 5 and the f-θ lens 7 are contaminated by impurities, it may have a critical effect on light scanning.

In order to prevent such optical devices from being contaminated by impurities, the optical devices are accommodated in a housing 10. The housing 10 includes a base 11 on which the optical devices are placed, and a cover member 13 that covers the base 11. Here, the base 11 and the cover member 13 are respectively provided with openings 11a and 11b in which an emission window 15 through which the beam deflected by the beam deflector 5 passes is set.

With the structure where the beam passes through the emission window 15, however, the beam may be externally ejected through the emission window 15 when supplies of the image forming apparatus are replaced or replenished. In addition, treating the light scanning unit with the emission window 15 exposed to the outside may make the emission window 15 dirty or deteriorated.

As one of conventional techniques, Japanese Laid-open Patent Publication No. H11-167080 (titled "Laser scanning optical device, published on June 22, 1999) discloses a shutter structure that blocks a beam.

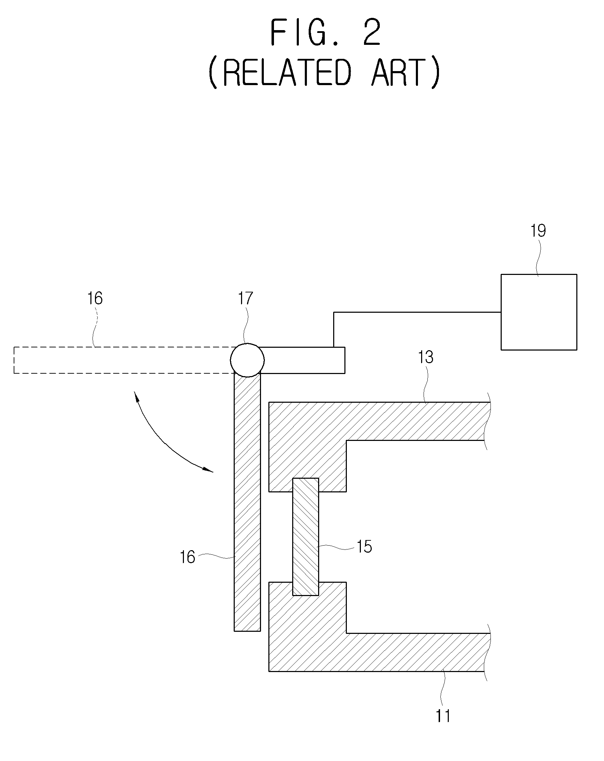

Referring to FIG. 2, a conventional shutter structure for the light scanning unit includes a shutter 16 that blocks or passes the beam that passes through the emission window 15, and a shutter driving unit 19 that drives the shutter 16. The shutter 16 is provided to be rotated around a support 17.

With this configuration, when a toner cartridge or a photosensitive medium is replenished or replaced, the shutter 16 is rotated by the shutter driving unit 19, with respect to the support 17 as a rotation axis, to block the beam that passes through the emission window 15.

However, the conventional shutter structure having the structure where the shutter is driven by the shutter driving unit has a disadvantage of an increase of product costs and a complexity of configuration. In addition, since the shutter structure is electrically controlled to block or pass the beam that passes through the emission window, there is a drawback in that the shutter structure can not operate in a non-power state.

### SUMMARY OF THE INVENTION

The invention provides a shutter structure for a light scanning unit, which is capable of opening/closing a shutter in cooperation with adjacent components, without being electrically controlled, and an image forming apparatus using the same.

Additional aspects and utilities of the present general inventive concept will be set forth in part in the description which follows and, in part, will be obvious from the description, or may be learned by practice of the present general inventive concept.

According to the present invention there is provided an apparatus and method as set forth in the appended claims. Other features of the invention will be apparent from the dependent claims, and the description which follows.

According to an aspect of the present invention there is provided a shutter structure for a light scanning unit, which is to be used for the light scanning unit that scans a photosensitive medium of a developing unit with a beam deflected by a beam deflector accommodated in a housing having an emission window, and selectively blocks the beam that passes through the emission window, comprising: a shutter that is rotatably disposed outside the housing and selectively blocks the beam that passes through the emission window; a joining unit that is formed at corresponding positions of the shutter and the housing so that the shutter is rotatably joined with the housing; and a push member that pushes the shutter so that the shutter is rotated in a direction in which the emission window is opened.

The push member is preferably disposed in the developing unit and pushes the shutter when the developing unit is coupled with the light scanning unit.

The joining unit preferably comprises: a rotation support member that is disposed outside the housing; and a rotation member that is preferably disposed in the shutter with a shape corresponding to the rotation support member and is joined with the rotation support member.

The shutter preferably comprises a shield portion that is disposed opposite to the emission window when the emission window blocks the beam directed at the emission window, and an operating portion that contacts the push member, wherein the joining unit is preferably disposed at an interface between the shield portion and the operating portion.

The operating portion is preferably located proximate to the shield portion corresponding to a position of the light scanning unit and the center of gravity of the shutter lies within the shield portion, wherein the shutter is preferably rotated by a weight of the shutter so that the shield portion shields the emission window when the push member does not contact the operating portion.

The joining unit preferably further comprises an elastic member that elastically biases the shutter so that the shield portion shields the emission window when the push member does not contact the operating portion.

According to another aspect of the invention, there is provided an image forming apparatus, comprising: a developing unit that comprises a developer housing in which toner is accommodated and a photosensitive medium is provided in the developer housing, and forms a toner image on the photosensitive medium; a light scanning unit that comprises a housing having an emission window and a beam deflector accommodated in the housing, and forms an electrostatic latent image on the photosensitive medium by scanning the photosensitive medium with a beam deflected by the beam deflector; a shutter structure that comprises a shutter that is rotatably provided outside the housing and selectively blocks the beam directed at the emission window, a joining unit that is formed at corresponding positions of the shutter and the housing so that the shutter is rotatably joined with the housing, and a push member that pushes the shutter so that the shutter is rotated in a direction in which the emission window is opened; a transfer unit that transfers the toner image, which is formed on the photosensitive medium, on a print medium; and a fixing unit that fixes the toner image transferred on the print medium.

The joining unit of the shutter structure preferably comprises: a rotation support member that is disposed outside the housing; and a rotation member that is preferably disposed in the shutter with a shape corresponding to the rotation support member and is joined with the rotation support member.

The shutter preferably comprises a shield portion that is disposed opposite to the emission window when the emission window blocks the beam directed at the emission window, and an operating portion that contacts the push member, wherein the joining unit is preferably located at an interface between the shield portion and the operating portion.

The operating portion is preferably proximate the shield portion corresponding to a position of the light scanning unit and the center of gravity of the shutter lies within the shield portion, and the shutter is preferably rotated by a weight of the shutter so that the shield portion shields the emission window when the push member does not contact the operating portion.

The joining unit preferably further comprises an elastic member that elastically biases the shutter so that the shield portion shields the emission window when the push member does not contact the operating portion.

According to another aspect of the present invention there is provided a light scanning unit usable with a shutter unit having a blocking position and a non-blocking position, the light scanning unit comprising: an emission window; a light source emitting a light beam toward the emission window; and a pushing member to selectively contact the shutter unit and to place the shutter unit in at least one of the blocking position to block the light beam from passing through the emission window and the non-blocking position to allow the light beam to pass through the emission window.

### BRIEF DESCRIPTION OF THE DRAWINGS

These and/or other aspects and utilities of the present general inventive concept will become apparent and more readily appreciated from the following description of the exemplary embodiments, taken in conjunction with the accompanying drawings, in which:
FIG. 1 is a perspective view illustrating a conventional light scanning unit;
FIG. 2 is a partial sectional view illustrating a conventional shutter structure for a light scanning unit;
FIG. 3 is a separated sectional view illustrating a shutter structure for a light scanning unit according to an exemplary embodiment of the present general inventive concept;
FIG. 4 is a separated perspective view illustrating a shutter structure for a light scanning unit according to an exemplary embodiment of the present general inventive concept;
FIGs. 5A and 5B are sectional views illustrating operation states of the shutter structure of the light scanning unit general inventive concept of FIG. 4;
FIG. 6A is a separated sectional view illustrating a shutter structure for a light scanning unit according to another exemplary embodiment of the present general inventive concept;
FIG. 6B is a separated perspective view illustrating a shutter structure for a light scanning unit according to another exemplary embodiment of the present general inventive concept;
FIG. 7 is a sectional view illustrating a shutter structure for a light scanning unit according to still another exemplary embodiment of the present general inventive concept; and
FIG. 8 is a schematic sectional view illustrating an image forming apparatus according to an exemplary embodiment of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to like elements throughout. The embodiments are described below so as to explain the present general inventive concept by referring to the figures.

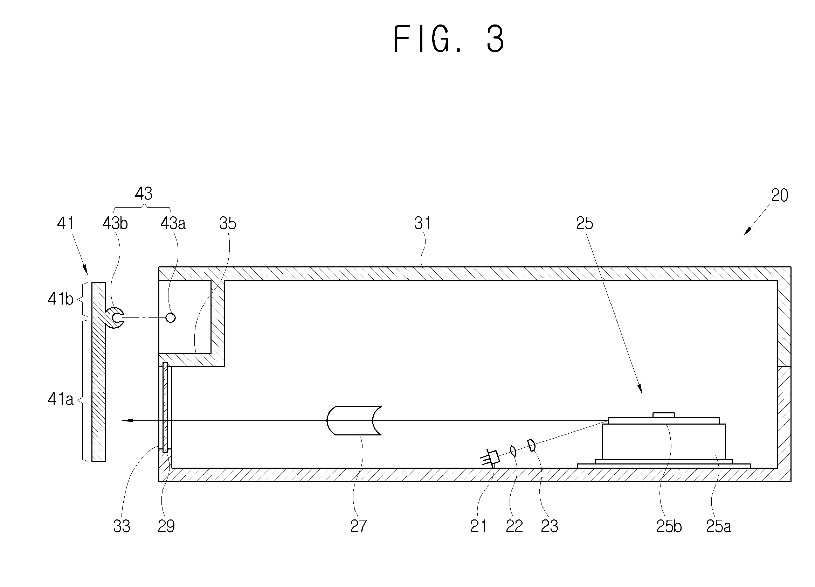

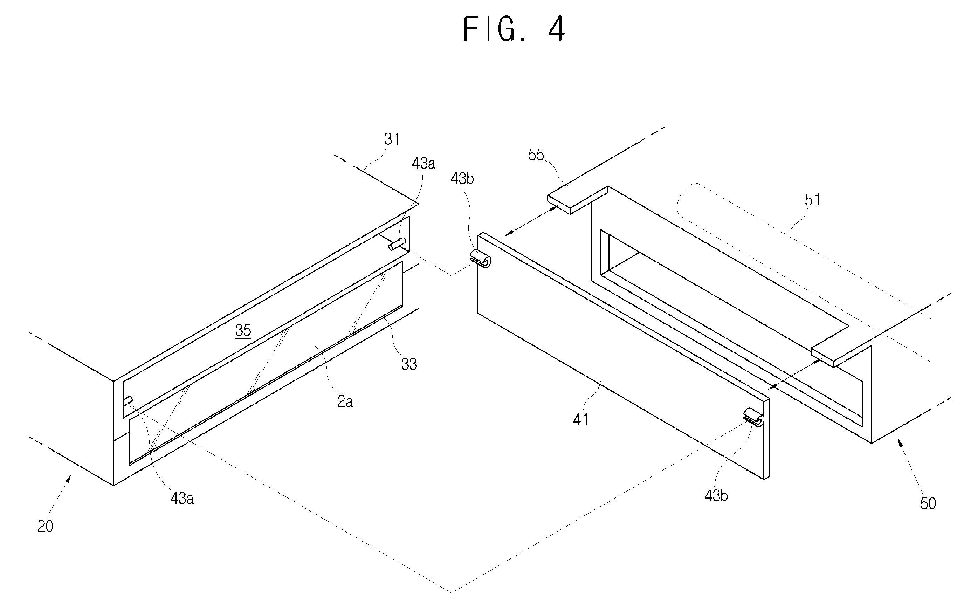

FIG. 3 is a separated sectional view illustrating a shutter structure for a light scanning unit according to an exemplary embodiment of the present general inventive concept, and FIG. 4 is a separated perspective view illustrating a shutter structure for a light scanning unit according to an exemplary embodiment of the present general inventive concept.

Referring to FIGS. 3 and 4, a shutter structure for a light scanning unit according to an exemplary embodiment of the present general inventive concept is used in a light scanning unit 20 and selectively blocks a beam emitted from the light scanning unit 20.

The light scanning unit 20 comprises a housing 31 having an opening 33, a light source 21 emits a light beam, a beam deflector 25 and an f-θ lens 27 which is provided within the housing 31. The opening 33 is provided with an emission window 29 through which the beam deflected by the beam deflector 25 passes. Accordingly, since the inside of the housing 31 is isolated from the outside of the housing 31, impurities are prevented from being introduced into the inside of the housing 31. In addition, the deflected beam is scanned on a photosensitive medium 51 of a developing unit 50 through the emission window 29.

The light source 21 comprises a semiconductor laser or the like to emit the beam.

The beam deflector 25 deflects the beam incident from the light source 21 such that the deflected beam is scanned on the photosensitive medium 51 provided inside the developing unit 50. The beam deflector 25 comprises a driving source 25a and a polygon mirror 25b that is rotated by the driving source 25a and has a plurality of reflecting planes. With such configuration, the beam emitted from the light source 21 is focused on one of the plurality of reflecting planes and is deflected, i.e., changed in its reflection direction while the polygon mirror 25b is rotated. In an embodiment of the present general inventive concept, the beam deflector 25 may comprise a hologram disk or a galvano mirror, rather than and/or in addition to the polygon mirror 25b.

The f-θ lens 27 condenses the beam deflected by the beam deflector 25 and corrects a scanning angle.

In addition, the light scanning unit 20 further comprises a collimating lens 22 that is placed on an optical path between the light source 21 and the beam deflector 25 and converges the beam emitted from the light source 21, and a cylinder lens 23 that shapes the beam.

In this embodiment, the shutter structure comprises a shutter 41 that selectively blocks the beam that passes through the emission window 29, a joining unit 43 that rotatably joins the shutter 41 with the housing 31, and a push member 55 that pressurizes the shutter 41 to rotate the shutter 41 in a direction in which the emission window 29 is opened.

The shutter 41 is rotatably provided outside the housing 31 by the joining unit 43. The shutter 41 comprises a shield portion 41a that faces the emission window 29 when the beam that passes through the emission window 29 is blocked, and an operating portion 41b that contacts the push member 55. The joining unit 43 is located at an interface between the shield portion 41a and the operating portion 41b.

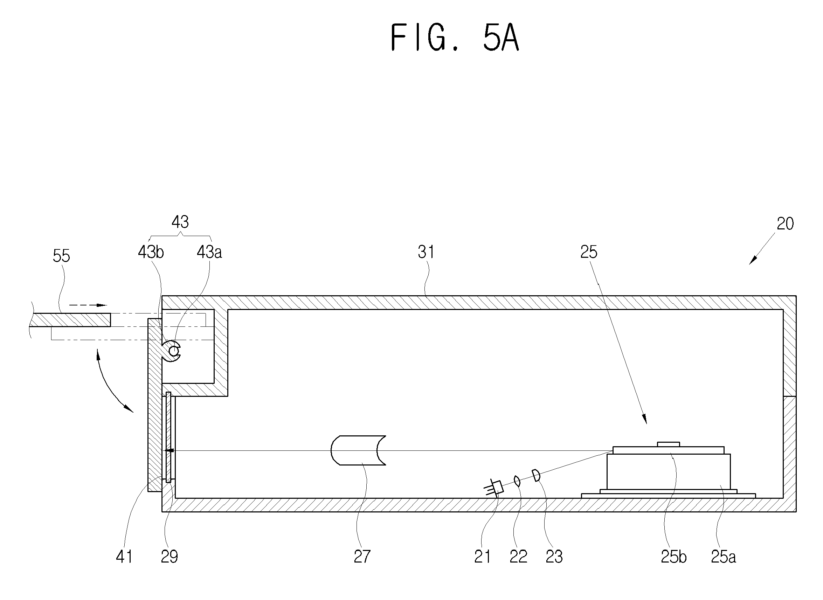

For the arrangement of the shutter 41, in an embodiment of the present general inventive concept, the operating portion 41b is located above the shield portion 41a on the basis of a position of the light scanning unit 20 and the center of gravity of the shutter 41 lies within the shield portion 41a. Accordingly, when the push member 55 does not contact the operating portion 41b, the shield portion 41a is located in front of the emission window 29 by the weight of the shield portion 41a, as illustrated in FIG. 5A. Accordingly, the emission window 29 is prevented from being exposed to the outside, and the beam that passes through the emission window 29 is blocked.

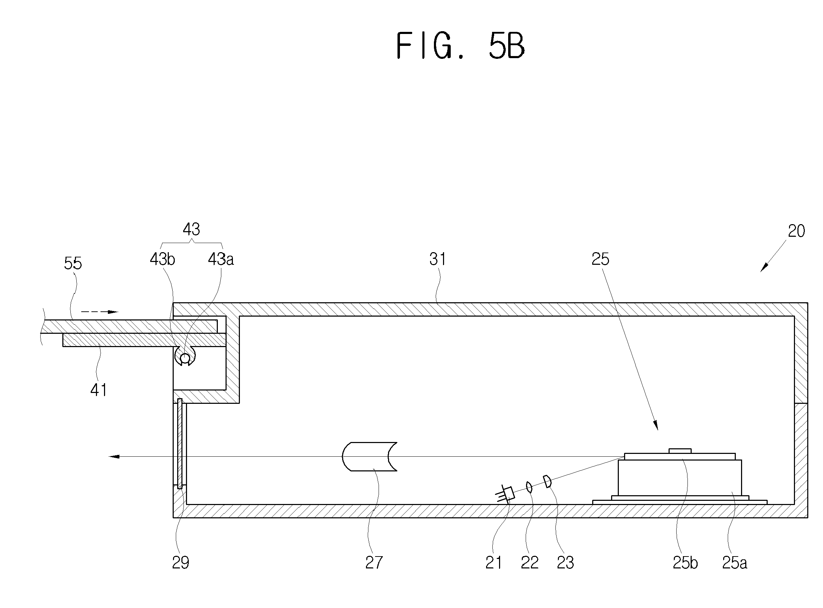

On the other hand, when the push member 55 pressurizes the operating portion 41b, the shutter 41 is rotated around the joining unit 43 such that the emission window 29 is opened, as illustrated in FIG. 5B.

The joining unit 43 is provided in corresponding positions of the shutter 41 and the housing 31. The joining unit 43 comprises a rotation support member 43a that is provided in the housing 31, and a rotation member 43b that is provided in the shutter 41 and joined with the rotation support member 43a.

The rotation support member 43a is provided in a mounting unit 35 formed outside the housing 31, and may have a cylindrical shape, as illustrated in FIGs. 3 and 4. The mounting unit 35 is a space in which the rotation support member 43a is formed and the operating portion 41b and the push member 55 freely comes in and out when the shutter 41 is rotated. Although it is illustrated in FIGs. 3 and 4 that the mounting unit 35 has a recessed groove structure, the mounting unit 35 may have various different structures as long as the operating portion 41b and the push member 55 can freely come in and out.

The rotation member 43b is provided in the shutter 41 with a shape corresponding to the rotation support member 43a. For example, if the rotation support member 43a has a cylindrical shape, the rotation member 43b may have a swivel-like structure, as illustrated in FIGs. 3 and 4. Accordingly, the swivel-like rotation member 43b is partially opened so that it can be fitted into the rotation support member 43a. Accordingly, by fitting the cylindrical rotation support member 43a into the swivel-like structure of the rotation member 43b through the opened portion, the shutter 41 can be freely rotated inside the mounting unit 35 of the housing 31.

The push member 55 is provided at a side of an apparatus in which the light scanning unit 20 is employed, and rotates the shutter 41 in a direction in which the emission window 29 is opened by pushing the shutter 41 when the light scanning unit 20 is coupled with the apparatus.

In an embodiment of the present general inventive concept, the push member 55 is provided in an expendable item of the image forming apparatus employing the light scanning unit 20. An example of the expendable item may be the developing unit 50 including the photosensitive medium 51 exposed by the beam, toner, and a developing roller (not illustrated) and so on. Accordingly, when the developing unit 50 is mounted on the image forming apparatus, one side of the developing unit 50 faces the shutter 41. In addition, the push member 55 projects from the developing unit 50 such that the shutter 41 can be pushed when the light scanning unit 20 is coupled with the developing unit 50.

On the other hand, when the developing unit 50 is removed from the image forming apparatus, a pressuring force acting between the push member 55 and the shutter 41 is released, and accordingly, the shutter 41 is rotated by its own-weight, thereby covering the emission window 29.

The push member 55 may be provided in expendable items such as a toner cartridge and so on, or in a door of the image forming apparatus, without being limited to the developing unit 50.

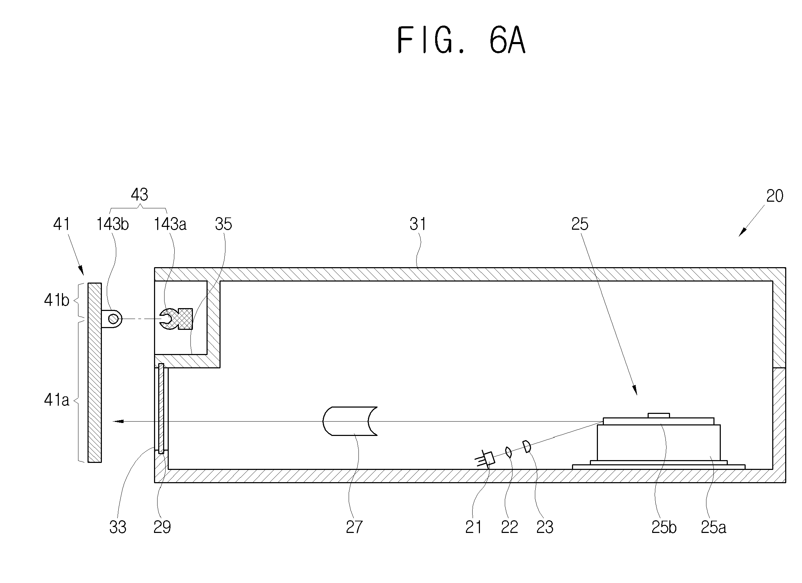

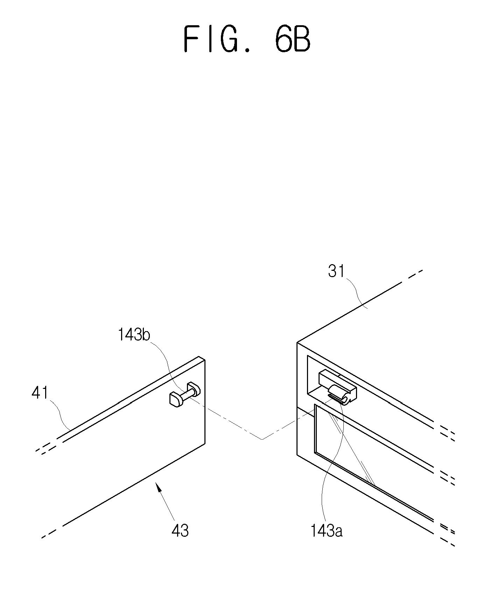

FIG. 6A is a separated sectional view illustrating a shutter structure for a light scanning unit according to another exemplary embodiment of the present general inventive concept, and FIG. 6B is a separated perspective view illustrating a shutter structure for a light scanning unit according to another exemplary embodiment of the present.

Referring to FIGs. 6A and 6B, a shutter structure according to another exemplary embodiment is different from the shutter structure according to the above-described exemplary embodiment in that a configuration of the joining unit 43 is changed. In another exemplary embodiment, the same elements as the above-described exemplary embodiment are denoted by the same reference numerals, and explanation thereof will be omitted for the sake of avoiding complexity of description.

The joining unit 43 comprises a rotation support member 143a that is provided in the housing 31, and a rotation member 143b that is provided in the shutter 41 and joined with the rotation support member 143a.

The rotation support member 143a is provided in the mounting unit 35 formed outside the housing 31. As illustrated in FIGs. 6A and 6B, the rotation support member 143a has a swivel-like structure. Accordingly, the swivel-like rotation support member 143a is partially opened so that the rotation member 143b can be fitted into the rotation support member 143a. The rotation member 143b is provided in the shutter 41 with a shape corresponding to the rotation support member 143a. For example, if the rotation support member 143a has the swivel-like shape, the rotation member 143b may have a cylindrical structure. Accordingly, by fitting the cylindrical rotation member 143b into the swivel-like structure of the rotation support member 143a through the opened portion, the shutter 41 can be freely rotated inside the mounting unit 35 of the housing 31.

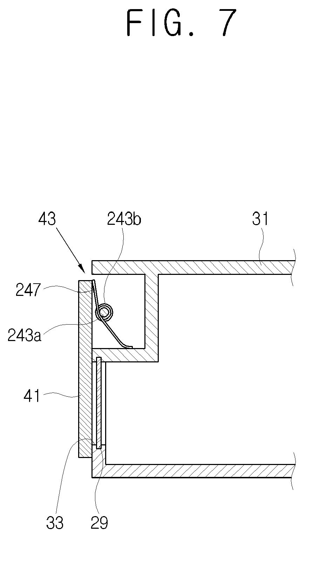

FIG. 7 is a sectional view illustrating a shutter structure for a light scanning unit according to still another exemplary embodiment of the present general inventive concept.

Referring to FIG. 7, a shutter structure according to still another exemplary embodiment is different from the shutter structure according to the above-described exemplary embodiment in that a configuration of the joining unit 43 is changed. In still another exemplary embodiment, the same elements as the above-described exemplary embodiment are denoted by the same reference numerals, and explanation thereof will be omitted for the sake of avoiding complexity of description.

The joining unit 43 comprises a rotation support member 243a that is provided in the housing 31, a rotation member 243b that is provided in the shutter 41 and joined with the rotation support member 243a, and an elastic member 247. Here, the rotation support member 243a and the rotation member 243b have substantially the same configuration as the rotation support members 43a and 143a and the rotation member 43b and 143b in the above-described embodiments.

The elastic member 247 elastically biases the shutter 41 such that the shutter 41 shields the emission window 29 when the push member 55 is not in contact with the shutter 41. Accordingly, the emission window 29 can be shielded by an elastic force of the elastic member 247 even when it is difficult to shield the emission window 29 by the weight of the shutter 41 due to a direction change of an arrangement of the light scanning unit 20.

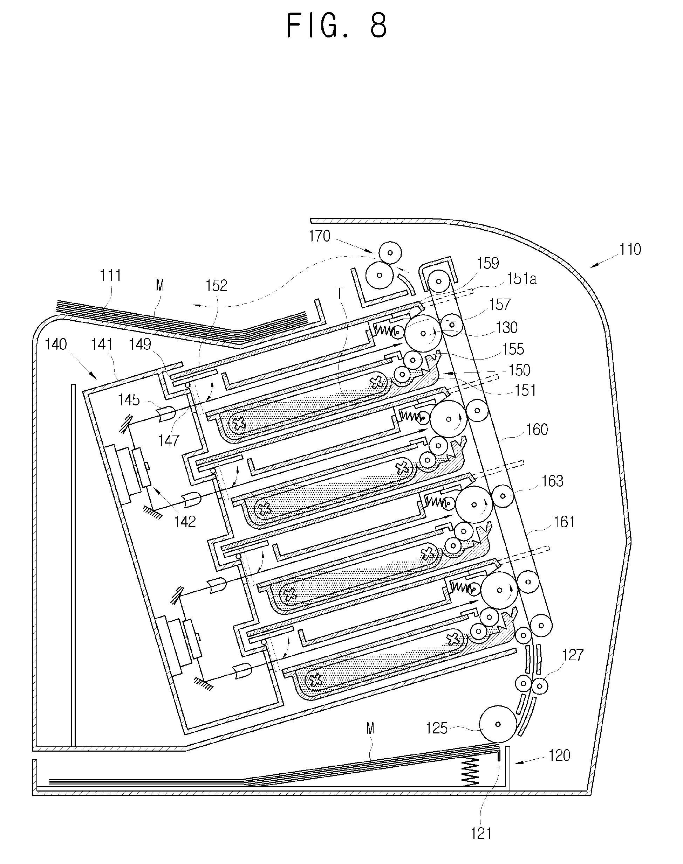

FIG. 8 is a schematic sectional view illustrating an image forming apparatus according to an exemplary embodiment of the present general inventive concept.

Referring to FIG. 8, an image forming apparatus according to an exemplary embodiment of the present general inventive concept, which is a tandem type color image forming apparatus, comprises a cabinet 110, a developing unit 150, a light scanning unit 140, a shutter structure, a transfer unit 160, and a fixing unit 170, which are mounted within the cabinet 110.

The cabinet 110 forms an external appearance of the image forming apparatus. An exit unit 111 on which exited printing medium M is loaded is provided outside the cabinet 110. In addition, the cabinet 110 is detachably provided with a supply unit 120 on which printing medium M to be supplied is loaded. The printing medium M to be supplied through the supply unit 120 is fed to the developing unit 150 via a feeding path.

The supply unit 120, which is provided within the cabinet 110, picks up a sheet of loaded printing media M by rotation of a feeding roller 125 and supplies the picked printing medium through a transfer roller 127.

The developing unit 150 comprises a developer housing 151 in which toner T is accommodated, and a photosensitive medium 130 that is provided in the developer housing 151 and is sensitive to an incident light beam. In addition, the developing unit 150 further comprises a developing roller 155 that develops the toner for a region in which an electrostatic latent image is formed, a charger 157 that charges the developing roller 155 and the photosensitive medium 130 to a predetermined potential, and a cleaning blade 159 that removes waste toner remaining in the photosensitive medium 130. The developing unit 150 is provided for each color to form a full color image using a single pass method. FIG. 8 illustrates four units to implement yellow (Y), magenta (M), cyan (C), and black (K) color images, respectively.

The developing unit 150, which is a supply which can be replaced when the toner T or other elements accommodated therein is exhausted, is separated from the cabinet 110 when a knob 151a provided in the developer housing 151 is pulled. That is, when the developing unit 150 is separated from the cabinet 110, the developing unit 150 moves in an opposite direction from a position at which the light scanning unit 140 is placed.

The light scanning unit 140 scans a plurality of photosensitive media 130 with the beam so that electrostatic latent images are formed on the photosensitive media 130. To this end, the light scanning unit 140 has a multi-beam scanning structure to scan the plurality of photosensitive media 130 with the beam simultaneously. That is, the light scanning unit 140 comprises a housing 141 having an emission window 147, a plurality of light source (not illustrated) accommodated in the housing 141, a beam deflector 142 that deflects a beam emitted from the light sources, and an f-θ lens 145 that focuses the beam deflected by the beam deflector 142 on the photosensitive medium 130. In the multi-beam scanning structure as configured above, the emission window 147 is placed in the housing 141 by numbers corresponding to the number of scanning beams.

The light scanning unit 140 may have a single-beam scanning structure if it is applied to a multi-pass type image forming apparatus or a monochrome image forming apparatus, without being limited to the multi-beam scanning structure. Accordingly, the light scanning unit has the single emission window structure as illustrated in FIG. 3.

Referring to FIG. 8, the shutter structure comprises a shutter 149 that blocks the beam that passes through the emission window 147, a joining unit (not illustrated) that is rotatably joined with the housing 141, and a push member. The shutter 149is rotatably provided outside the housing 141 and selectively blocks the beam that passes through the emission window 147. The joining unit is formed at corresponding positions of the shutter 149 and the housing 141 and rotatably joins the shutter 149 with the housing 141. The push member is provided in the developer housing 151 and pushes the shutter 149 when the developer housing 151 is mounted within the cabinet 110, so that the shutter 149 is rotated in the direction in which the emission window 147 is opened.

Here, since the shutter structure has substantially the same configuration and operation as the shutter structure for the light scanning unit according to the above exemplary embodiments described with reference to FIGs. 3 to 7, detailed explanation thereof will be omitted for the sake of avoiding complexity of description.

The transfer unit 160 is placed opposite to the photosensitive medium 130 with the printing medium M, which is fed via the feeding path, disposed therebetween, and transfers a toner image, which is formed on the photosensitive medium 130, on the printing medium M. To this end, the transfer unit 160 comprises a transfer belt 161 and a transfer backup roller 163 that are arranged opposite to the plurality of photosensitive media 130. The image transferred on the printing medium M through the transfer unit 160 is fixed by the fixing unit 170.

As apparent from the above description, the present general inventive concept provides a shutter structure for a light scanning unit, which is capable of preventing an emission window of the light scanning unit from being contaminated by alien substance and preventing a beam from be exposed externally when the light scanning unit is exposed to the outside, by providing a shutter in front of the emission window. In addition, the present general inventive concept provides a shutter structure for a light scanning unit, which is capable of opening or closing a shutter in cooperation with operation of a push member, without being electrically controlled, thereby reducing costs and simplifying the shutter structure.

In addition, the present general inventive concept provides a shutter structure for a light scanning unit, which is capable of opening or closing a shutter in cooperation with attachment/detachment of a developing unit by providing a shutter in front of the emission window of the light scanning unit and forming a push member to push the shutter in a housing. Accordingly, since the emission window can be closed when the light scanning unit is exposed to the outside, it can be prevented that a scanning beam is externally exposed and the emission window is contaminated by alien substance.

Although a few exemplary embodiments of the present general inventive concept have been illustrated and described, it will be appreciated by those skilled in the art that changes may be made in these embodiments without departing from the principles of the general inventive concept, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A shutter structure for a light scanning unit (20), which is to be used for the light scanning unit (20) that scans a photosensitive medium (51) of a developing unit (50) with a beam deflected by a beam deflector (25) accommodated in a housing (31) having an emission window (29), and selectively blocks the beam that passes through the emission window, comprising:
a shutter (41) that is rotatably disposed outside the housing (31) and is operable to selectively block the beam that passes through the emission window (29);
a joining unit (43) that is formed at corresponding positions of the shutter (41) and the housing (31) so that the shutter (41) is rotatably joined with the housing (31) ; and
a push member (55) that is operable to push the shutter (41) so that the shutter (41) is rotated in a direction in which the emission window (29) is opened.

2. The shutter structure according to claim 1, wherein the push member (55) is disposed in the developing unit (50) and is operable to push the shutter (41) when the developing unit (50) is coupled with the light scanning unit (20).

3. The shutter structure according to claim 1 or claim 2, wherein the joining unit (43) comprises:
a rotation support member (43a) that is disposed outside the housing (31); and
a rotation member (43b) that is disposed in the shutter (41) with a shape corresponding to the rotation support member (43a) and is joined with the rotation support member (43a).

4. The shutter structure according to one of claims 1 to 3, wherein the shutter (41) comprises a shield portion (41a) that is disposed opposite to the emission window (29) when the emission window blocks the beam directed at the emission window (29), and an operating portion (41b) that contacts the push member (55),
wherein the joining unit (43) is disposed at an interface between the shield portion (41a) and the operating portion (41b).

5. The shutter structure according to claim 4, wherein the operating portion (41b) is located proximate to the shield portion (41a) corresponding to a position of the light scanning unit (20) and the center of gravity (41) of the shutter lies within the shield portion (41a),
wherein the shutter (41) is operable to be rotated by a weight of the shutter so that the shield portion (41a) shields the emission window (29) when the push member (55) does not contact the operating portion (41b).

6. The shutter structure according to claim 4, wherein the joining unit (43) further comprises an elastic member that elastically biases the shutter (41) so that the shield portion (41a) shields the emission window (29) when the push member (55) does not contact the operating portion (41b).

7. An image forming apparatus, comprising:
a developing unit (50) that comprises a developer housing in which toner is accommodated and a photosensitive medium (51) is provided in the developer housing, and is operable to form a toner image on the photosensitive medium;
a light scanning unit (20) that comprises a housing (31) having an emission window (29) and a beam deflector (25) accommodated in the housing (31), and is operable to form an electrostatic latent image on the photosensitive medium (51) by scanning the photosensitive medium (51) with a beam deflected by the beam deflector;
a shutter structure that comprises a shutter (41) that is rotatably provided outside the housing (31) and is operable to selectively block the beam directed at the emission window (29), a joining unit (43) that is formed at corresponding positions of the shutter (41) and the housing (31) so that the shutter (41) is rotatably joined with the housing (31), and a push member (55) that is operable to push the shutter (41) so that the shutter (41) is rotated in a direction in which the emission window (29) is opened;
a transfer unit (160) that is operable to transfer the toner image, which is formed on the photosensitive medium (51), on a print medium; and
a fixing unit (170) that is operable to fix the toner image transferred on the print medium.

8. The image forming apparatus according to claim 7, wherein the joining unit (43) of the shutter structure comprises:
a rotation support member (43a) that is disposed outside the housing (31); and
a rotation member (43b) that is disposed in the shutter (41) with a shape corresponding to the rotation support member (43a) and is joined with the rotation support member (43a).

9. The image forming apparatus according to one of claims 7 and 8, wherein the shutter (41) comprises a shield portion (41a) that is disposed opposite to the emission window (29) when the emission window (29) blocks the beam directed at the emission window (29), and an operating portion (41b) that contacts the push member,
wherein the joining unit (43) is located at an interface between the shield portion (41a) and the operating portion (41b).

10. The image forming apparatus according to claim 9, wherein the operating portion is proximate to the shield portion corresponding to a position of the light scanning unit (20) and the center of gravity of the shutter (41) lies within the shield portion,
wherein the shutter (41) is rotatable by a weight of the shutter (41) so that the shield portion shields the emission window (29) when the push member (55) does not contact the operating portion.

11. The image forming apparatus according to claim 9, wherein the joining unit (43) further comprises an elastic member that is operable to elastically bias the shutter (41) so that the shield portion shields the emission window (29) when the push member (55) does not contact the operating portion.

12. A light scanning unit (20) usable with a shutter unit having a blocking position and a non-blocking position, the light scanning unit (20) comprising:
an emission window (29);
a light source for emitting a light beam toward the emission window; and
a pushing member (55) to selectively contact the shutter unit and to place the shutter unit in at least one of the blocking position to block the light beam from passing through the emission window (29) and the non-blocking position to allow the light beam to pass through the emission window (28).
